Europäisches Patentamt

European Patent Office

Office européen des brevets

(11) Veröffentlichungsnummer: **0 164 660**
**B1**

# (12) EUROPÄISCHE PATENTSCHRIFT

(45) Veröffentlichungstag der Patentschrift: **18.07.90**

(21) Anmeldenummer: **85106707.4**

(22) Anmeldetag: **31.05.85**

(51) Int. Cl.⁵: **A 47 J 31/00**

(54) Vorrichtung zum Zubereiten einer vorbestimmten Menge eines Brühgetränks, insbes. Kaffee.

(30) Priorität: **15.06.84 DE 3422290**

(43) Veröffentlichungstag der Anmeldung:
**18.12.85 Patentblatt 85/51**

(45) Bekanntmachung des Hinweises auf die
Patenterteilung:
**18.07.90 Patentblatt 90/29**

(84) Benannte Vertragsstaaten:
**AT CH GB LI NL SE**

(56) Entgegenhaltungen:
**US-A-2 561 134**
**US-A-2 827 845**
**US-A-3 348 468**
**US-E- 25 663**

(73) Patentinhaber: **HGZ Maschinenbau AG**
**Industriestrasse 34**
**CH-8108 Dällikon - ZH (CH)**

(72) Erfinder: **Sager, Peter**
**Rebbergstrasse 25**
**CH-8113 Boppelsen (CH)**

(74) Vertreter: **Patentanwälte Dipl.-Ing. Rudolf**
**Bibrach Dipl.-Ing. Elmar Rehberg**
**Pütterweg 6 Postfach 738**
**D-3400 Göttingen (DE)**

Courier Press, Leamington Spa, England.

EP 0 164 660 B1

**Beschreibung**

Die Erfindung bezieht sich auf eine Vorrichtung zum Zubereiten vorbestimmter Mengen eines Brühgetränks, insbesondere Kaffee. Derartige Vorrichtungen dienen dazu, größere Mengen frisch gebrühten Kaffees sowie meist zusätzlich entsprechende Mengen Heißwassers für die Teebereitung zur Verfügung zu stellen. Die Erfindung zielt darauf ab, den Service insbesondere in Frühstücksräumen großer Hotels, also an Plätzen, an denen größere Mengen Kaffee karaffenweise benötigt werden, derart zu verbessern, daß eine wesentliche Erleichterung für die Bedienungsperson, die eine Aufsichtsperson oder ein Frühstücksgast sein kann, eintritt, in dem zwar noch das Brühen gestartet werden muß, jedoch die Karaffe mit dem frisch gebrühten Kaffee unbeaufsichtigt gefüllt wird. Eine derartige Vorrichtung wird auch als Mengenfrischbrühautomat bezeichnet.

Die DE—A—25 26 570 zeigt auch einen Mengenfrischbrühautomaten mit einer automatisch und chargenweise arbeitenden Brühvorrichtung, wobei dem Brühraum drei Auffangbehälter nachgeordnet sind, die jeweils mit einer unteren und oberen Niveausonde ausgestattet sind. Das Volumen jedes Auffangbehälters bzw. entsprechend der Anordnung der Niveausonden bestimmt die Brühcharge, so daß jeder Behälter geeignet ist, eine ganze Brühcharge aufzunehmen. Über entsprechende Auslaßventile kann an einem Auslaß der frisch gebrühte, zwischengespeicherte Kaffee abgezogen werden. Dieser bekannte Mengenfrischbrühautomat ist in der Größe der abzuziehenden Kaffeemengen sehr variabel, d.h. es können sowohl Einzeltassen als auch Kännchen und Karaffen befüllt werden. Dies ist allerdings nur unter Überwachung durch eine Aufsichtsperson möglich. Der Mengenfrischbrühautomat weist neben den drei Auffangbehältern eine aufwendige Steuereinrichtung auf, die sowohl beim Befüllen, also bei dem Ablauf der einzelnen Brühchargen, als auch bei der Entnahme des Kaffees, eine gewisse Reihenfolge einhält derart, daß frisch gebrühter Kaffee mit im Auffangbehälter bereits befindlichem Kaffee nicht vermischt wird. Dieser Vorteil wird durch den Aufwand der drei Auffangbehälter erreicht. Durch diese Zwischenspeicherung des Kaffees ist der ausgeschenkte Kaffee, insbesondere dann, wenn nur relativ kleine Mengen pro Zeiteinheit entnommen werden, nicht ganz frisch.

Auch die DE—C—14 54 224 zeigt einen Mengenfrischbrühautomaten, also eine Vorrichtung, bei der die einzelnen Brühvorgänge chargenweise und automatisch durch eine Steuereinrichtung gesteuert ablaufen. Dem Brühraum ist ein erster Auffangbehälter nachgeordnet, der zur Aufnahme einer Charge gebrühten Kaffees bestimmt ist. Über zwei in dem Auffangbehälter angeordnete Niveausonden wird die Brühcharge festgelegt. Nachgeordnet zu dem Auffangbehälter ist ein großvolumiger Vorratsbehälter als Warmhaltebehälter vorgesehen, der ebenfalls mit Niveausonden ausgestattet ist, die bei entsprechendem Abzug gebrühten Kaffees einen weiteren Brühvorgang auslösen können, so daß eine gewisse Menge Kaffee immer vorrätig gehalten werden kann. Der Nachteil dieser Vorrichtung besteht darin, daß auch hier dem Brühraum verschiedene Behälter nachgeschaltet sind und der gebrühte Kaffee von einem Behälter in den anderen Behälter umgelagert wird, so daß der letztlich zum Ausschank gelangende Kaffee nicht ganz frisch gebrüht ist. Außerdem tritt der Nachteil auf, daß aus dem Auffangbehälter in den Vorratsbehälter überführter frisch gebrühter Kaffee jeweils mit abgestandenem Kaffee im Vorratsbehälter vermischt wird. Der Vorratsbehälter besitzt an seinem Auslauf einen Zapfhahn, der entsprechend betätigt werden kann. Auf diese Art und Weise ist es auch möglich, mit dieser Vorrichtung eine Karaffe Kaffee abzuziehen. Allerdings ist auch hier die Anwesenheit der Aufsichtsperson erforderlich.

Die DE—A—20 48 163 zeigt eine Ausgabevorrichtung für Getränke, insbesondere Kaffee, wobei einem großvolumigen Vorratsbehälter ein Meßbehälter nachgeschaltet ist, der mit Niveausonden auf unterschiedlicher Höhe ausgestattet ist, entsprechend der jeweils gewünschten Abzugsmenge für eine Einzeltasse oder für ein Kännchen. Für das Abstellen der Einzeltasse oder des Kännchens unter dem Auslauf eines entsprechenden Ventils ist ein Standteller vorgesehen, der auf einer Feder gelagert ist, so daß dieser Standteller beim Aufsetzen einer leeren Einzeltasse oder eines Kännchens — bedingt durch das unterschiedliche Gewicht des jeweils leeren Gefäßes — unterschiedlich weit absinkt. Es ist damit gleichzeitig ein Schalter bzw. Taster geschaffen, der auf das Gewicht oder in einer anderen Ausführungsform auf die Form des jeweiligen zu befüllenden Behälters anspricht, so daß über die jeweils ausgewählte Niveausonde in dem Meßbehälter eine entsprechende Kaffeemenge aus dem Vorratsbehälter zunächst in den Meßbehälter und dann von dem Meßbehälter in die Einzeltasse bzw. das Kännchen überführt wird. Dieser Taster dient somit der Feststellung, ob eine Einzeltasse oder ein Kännchen unter den Auslauf gestellt ist und bestimmt je nach dem in Verbindung mit dem Meßbehälter die Auslaufmenge. Der Taster ist damit ein Identifikationstaster. Es ist aber noch ein weiterer Schalter bzw. Taster vorgesehen, der einen Positionsschalter betätigt, der im Stromkreis des Magnetventils eingeschaltet ist, welches den Durchfluß von dem Vorratsbehälter in den Meßbehälter und von dem Meßbehälter in die Einzeltasse oder das Kännchen steuert. Dieser Schalter ist eine Art Positionsschalter, weil er nur dann die Überführung von Kaffee aus dem Vorratsbehälter in den Meßbehälter gestattet, wenn auch eine Einzeltasse oder ein Kännchen sich in Position auf dem Standteller befindet. Die einzelnen Brühvorgänge in den Vorratsbehälter hinein, wie sie bei der Zubereitung von Kaffee erforderlich sind, werden aber weder durch den Identifikationstaster noch durch den Positionsschalter beeinflußt.

Auch die US—A—2 827 845 zeigt eine Vorrichtung zum Zubereiten vorbestimmter Mengen eines Brühgetränks, insbesondere Kaffee, mit einer Einrichtung zum Erhitzen des Brühwassers. Es ist eine automatische, chargenweise arbeitende Brühvorrichtung vorgesehen, die über eine Steuereinrichtung gesteuert wird. Dabei ist dem Brühraum ein Einlaßventil vorgeschaltet und über ein Auslaßventil erfolgt die Überführung der Kaffeebrühe aus dem Brühraum in den Auslauf. Es werden immer einzelne Brühzyklen nacheinander gestartet und nach entsprechender Brühzeit in einen Auffangbehälter überführt. Das Brühgetränk kann in jedem geeigneten Vorratsbehälter unabhängig von seinem Volumen aufgefangen werden. So kann als Auffangbehälter auch eine Karaffe dienen, der eine untere und eine obere Niveausonde zugeordnet ist. Das Auslösen einer Brühcharge erfordert das Aufstellen eines leeren Auffanggefäßes auf einen Standteller. Da der Brühvorgang bei jeder Charge neu gestartet werden muß, ist eine Aufsichtsperson erforderlich. Lediglich durch das Aufstellen einer leeren Karaffe auf den Standteller wird kein Brühvorgang ausgelöst.

Allen bekannten Mengenfrischbrühautomaten aus dem Stand der Technik ist gemeinsam, daß der Brühvorrichtung bzw. dem eigentlichen Brühraum mindestens ein, jedoch häufig mehrere, auch unterschiedlich groß gestaltete Auffangbehälter innerhalb der Automaten nachgeschaltet sind. Hierdurch zeigt sich, daß es für erforderlich gehalten wird, dem Brühraum zunächst einmal einen fest installierten Auffangbehälter nachzuschalten, damit auch die gebrühte Kaffeecharge aufgenommen werden kann.

Der Erfindung liegt die Aufgabe zugrunde, eine Vorrichtung zum Zubereiten vorbestimmter Mengen eines Brühgetränks, also einen Mengenfrischbrühautomaten, derart weiterzubilden, daß eine leere Karaffe unbeaufsichtigt und ohne jeweilige, chargenweise Brühvorbereitung mit frisch gebrühtem Kaffee befüllt werden kann, so daß die Karaffe nur noch weggenommen werden muß, um zum Ausschank des frisch gebrühten und nicht mit abgestandenem Kaffee vermischten Kaffees bereit zu sein. Die Erfindung zielt darauf ab, den Service insbesondere in Frühstücksräumen großer Hotels derart zu verbessern, daß eine wesentliche Erleichterung für die Bedienungsperson eintritt, indem zwar noch das Brühen irgendwann gestartet werden muß, jedoch die leere Karaffe mit dem stets frisch gebrühten Kaffee an sich unbeaufsichtigt gefüllt wird.

Erfindungsgemäß wird dies durch die im Anspruch 1 angegebenen Merkmale erreicht. Die Erfindung löst sich damit vom bisherigen Stand der Technik und verzichtet auf die ortsfeste Anordnung von dem Brühraum nachgeschalteten Auffangbehältern innerhalb des Mengenfrischbrühautomaten. Es wird stattdessen die ohnehin erforderliche Karaffe als Auffangbehälter für die Brühcharge und als Meßbehälter für die Brühcharge benutzt. Gleichzeitig dient die Karaffe natürlich — wie bisher auch — dem Ausschenken von Kaffee. Mit der neuen Ausbildung wird nicht nur die Vorrichtung infolge Wegfalls der dem Brühraum nachgeschalteten Auffang- bzw. Zwischenbehälter einfacher, es wird auch gleichzeitig erreicht, daß eine Vermischung von frisch gebrühtem und abgestandenem Kaffee vermieden wird. Da ein Zwischenbehälter in der Vorrichtung fehlt, gelangt der gebrühte Kaffee auf kürzestem Wege von dem Brühraum in die Karaffe. Es steht dort ganz frisch gebrühter Kaffee zum Ausschenken bereit. Dies ist nicht nur am Aroma feststellbar, sondern auch an der Art des Auslaufs des Kaffees für die Aufsichtsperson und den Frühstücksgast sichtbar. Es wird zutreffenderweise der Eindruck erweckt, daß sich unmittelbar vorher gebrühter Kaffee in die Karaffe ergießt. Weiterhin ist vorteilhaft, daß die Steuereinrichtung für den Automaten auch insofern einfacher wird, als die Ansteuerung von Zwischenbehältern, entsprechenden Ventilen vor und nach diesen Zwischenbehältern und von Niveausonden in diesen Zwischenbehältern entfällt. Die räumliche Einsparung der Zwischenbehälter ermöglicht auch eine kleinere Bauweise. Die Vorrichtung ist schließlich sehr bedienungsfreundlich. Es ist nur noch erforderlich, eine leere Karaffe unter den Auslauf zu stellen und durch Knopfdruck eine Brühcharge zu starten. Es können — je nach Maschinenausbildung — beispielsweise zwei Brühplätze vorgesehen sein, die nacheinander mit gespeichertem Startimpuls abgearbeitet werden, so daß sich die Aufsichtsperson während der beiden Brühchargen und dem Auffüllen der Karaffen anderen Arbeiten zuwenden kann, z.B. dem Auffüllen bzw. Nachliefern von Frühstücksbrötchen usw. Es ist auch die Möglichkeit gegeben, daß sich der Gast — bedingt durch die große Einfachheit der Vorrichtung — selbst bedient, indem ihm lediglich von der Aufsichtsperson eine Karaffe mit frisch gebrühtem Kaffee auf eine Warmhalteplatte am Frühstückstisch gebracht wird. Die Erfindung fußt somit auf der Idee, mit einem Mengenfrischbrühautomat direkt eine Karaffe zu füllen und die Karaffe sowohl als Auffangbehälter für die gebrühte Kaffeecharge als auch zum Abmessen der Charge zu benutzen. Es versteht sich, daß die Steuervorrichtung der Vorrichtung so geschaltet ist, daß ohne eine unter den Auslauf gestellte Karaffe ein Brühvorgang nicht wirksam ausgelöst werden kann. Mit der Erfindung ist auch der Vorteil verbunden, daß sich die Reinigung der Vorrichtung vereinfacht. Es muß nur noch der Brühraum der Brühvorrichtung ausgespült werden. Die Reinigung des Zwischenspeichers und des Warmhaltebehälters in der Vorrichtung, die ja nicht vorhanden sind, entfällt.

Die Steuereinrichtung weist einen Positionsschalter zur Anzeige des mit einer Karaffe besetzten Standtellers auf. Dieser Positionsschalter ist so in den Stromkreis eingeschaltet, daß ein Brühvorgang nur dann gestartet werden kann, wenn der Standteller auch tatsächlich mit einer Karaffe besetzt ist. Dieser Positionsschalter kann in verschiedener Weise ausgebildet sein, beispielsweise in Abhängigkeit von der Formgebung der Karaffe oder auch in Abhängigkeit von dem Gewicht der leeren Karaffe. Auch die Anordnung einer Fotoschranke o.dgl. ist möglich. Die Steuereinrichtung mit dem Positionsschalter ist im übrigen so ausgebildet, daß beim versehentlichen Wegnehmen einer nicht voll befüllten Karaffe, also innerhalb des Ablaufs eines Brühvorgangs, das Auslaßventil schließt, so daß der Rest der Brühcharge nicht auf die Maschine läuft.

Für die Festlegung der Brühcharge selbst ergeben sich verschiedene Möglichkeiten. Am vorteilhaftesten ist in Verbindung mit den Merkmalen des Anspruches 1 die Möglichkeit, daß die Steuereinrichtung einen Gewichtsschalter aufweist, der am Standteller angeordnet ist, auf das Gewicht einer mit einer ganzen Brühcharge gefüllten Karaffe anspricht und dann das Auslaßventil schließt. Die Dosierung der Charge findet also hier mit Hilfe der Karaffe durch Gewichtsabtastung statt. Dieser Gewichtsschalter ist nicht auf das Gewicht einer leeren Karaffe, sondern auch die Summe des Gewichts der leeren Karaffe und des Gewichts der Brühcharge, also insgesamt auf das Gewicht der vollen Karaffe abgestimmt. Damit ist auch gleichzeitig sichergestellt, daß in dem Falle, wenn versehentlich eine fast leere Karaffe auf den Standteller gestellt und eine Brühcharge ausgelöst wird, die Karaffe nicht überlaufen kann. Die Abmessung der Brühcharge kann auch auf andere Weise erfolgen, beispielsweise dadurch, daß die Steuereinrichtung eine Einrichtung zum Abmessen einer Brühcharge Wassers, insbes. kalten Wassers, aufweist, wie dies z.B. aus der DE—B—17 78 190 bekannt ist. Hierdurch erhöht sich jedoch der Aufwand der Vorrichtung.

Die Vorrichtung weist einen Schalter zum Auslösen eines eine Brühcharge umfassenden Brühvorgangs auf, so daß das Aufstellen einer leeren oder vollen Karaffe auf den Standteller allein nicht ausreicht und nicht ausreichen soll, einen Brühvorgang auszulösen. Dies hat seinen Grund darin, daß der Standteller unter dem Auslauf auch als Warmhalteplatte ausgebildet ist, so daß es möglich sein soll, die unbeaufsichtigt einlaufende Brühcharge nicht sofort von dem Standteller wegnehmen zu müssen, sondern noch auf diesem belassen zu können, bis sie gebraucht wird. Wird dagegen in schnellerer Zeit eine größere Menge Kaffee benötigt, so kann die volle Karaffe natürlich sofort weggenommen, eine leere Karaffe untergestellt und ein erneuter Brühvorgang ausgelöst werden.

Die Vorrichtung kann neben dem Standteller unter dem Auslauf noch einen oder mehrere, als Warmhalteplatten ausgebildete Standteller aufweisen, um eine mit einer ganzen Brühcharge befüllte Karaffe oder auch eine teilweise leergeschenkte Karaffe abzustellen.

Um die Zubereitung von Tee am Sitzplatz des Gastes unter Verwendung von Teebeuteln o.dgl. zu ermöglichen, kann die Vorrichtung einen Heißwasserbrühplatz mit Standteller und Positionssowie Gewichtsschalter aufweisen. Auch hier wird eine Charge heißen Wassers genauso abgezogen, wie dies vorher hinsichtlich des Kaffees beschrieben wurde. Es besteht nur der Unterschied, daß das heiße Wasser nicht durch die Brühvorrichtung geleitet wird, sondern aus der Einrichtung zum Erhitzen des Brühwassers direkt abgezogen wird. Es versteht sich weiterhin, daß die Vorrichtung nur dann zur Abgabe von Kaffee oder Heißwasser für die Teebereitung bereit ist, wenn das Wasser im Erhitzer die vorgeschriebene Mindesttemperatur von 80°C. erreicht hat. Ebenso ist eine Sicherungseinrichtung eingebaut, die gewährleistet, daß bei der Auslösung eines Brühvorganges auch das entsprechende Kaffeepulver in dem dafür vorgesehenen Vorratsbehälter vorhanden ist.

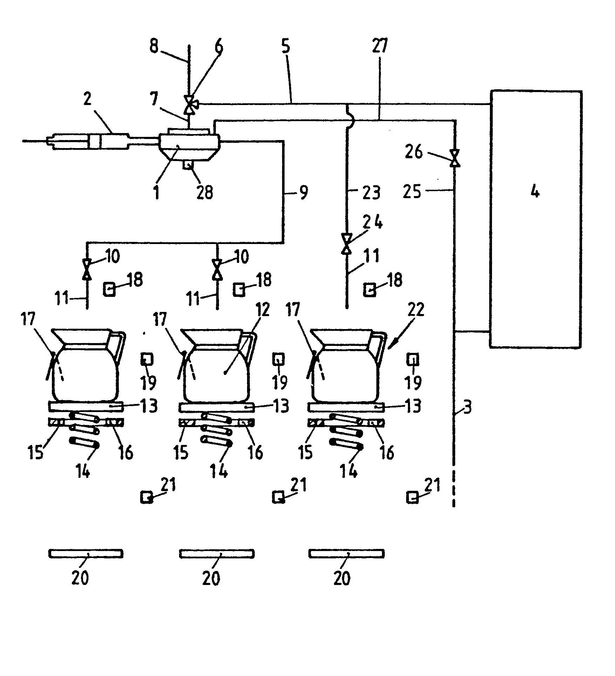

Die Erfindung wird anhand eines bevorzugten Ausführungsbeispiels weiter beschrieben. In der Zeichnung sind wesentliche Teile, soweit sie für das Verständnis erforderlich sind, schematisch dargestellt.

Die Vorrichtung besitzt eine automatische chargenweise arbeitende Brühvorrichtung mit einem Brühraum 1 und einer Kaffeepulverzuführeinrichtung 2 an eine Frischwasserleitung 3 für kaltes Wasser ist ein Durchlauferhitzer 4 angeschlossen. Anstelle des Durchlauferhitzers 4 kann auch eine andere Einrichtung zum Erwärmen bzw. Erhitzen des Wassers vorgesehen sein. Eine Leitung 5 für heißes Brühwasser führt von dem Durchlauferhitzer 4 zu einem als Dreiwegeventil ausgebildeten Einlaßventil 6, von dem einerseits eine Leitung 7 abzweigt, die in den Brühraum 1 führt, und andererseits eine Leitung 8 angeschlossen ist, die als Entlüftungsleitung in die Atmosphäre führt. An den Brühraum 1 ist eine Leitung 9 angeschlossen, über die im Falle eines Brühvorganges der gebrühte Kaffee über ein Auslaßventil 10 in einen Auslauf 11 gelangt. Unter dem Auslauf 11 ist eine Karaffe 12 angeordnet, die auf einem Standteller 13 steht, der auf einer Feder 14 abgestützt ist. Die Kraft der Feder 14 ist einstellbar, so daß der Standteller 13 mit der Karaffe 12 bei sich erhöhendem Gewicht durch den einfließenden Kaffee absinken kann. Unter dem Standteller 13 ist z.B. an einem ortsfesten Aufsetzring 15 ein Gewichtsschalter 16 vorgesehen. Die Feder 14 ist so eingestellt, daß eine mit Kaffee gefüllte Karaffe infolge ihres Gewichts den Standteller 13 auf den Aufsetzring 15 aufsetzt und dabei den Gewichtsschalter 16 betätigt. Dieser Gewichtsschalter 16 beendet den Brühvorgang bzw. die Brühcharge. Im Bereich des Standtellers 13 ist an der Maschine weiterhin ein Positionsschalter 17 vorgesehen, der z.B. formabhängig abtastet und damit die Erstellung eines Signals erlaubt, ob der Standteller 13 mit einer Karaffe 12 besetzt ist oder nicht. Die nicht besetzte Stellung ist gestrichelt dargestellt, während die Karaffe 12 den Positionsschalter 17 durch ihre Anwesenheit in die durchgezogene Stellung verschwenkt. Der Positionsschalter 17 ist in die Steuereinrichtung der Maschine so eingeschaltet, daß überhaupt nur dann ein Brühvorgang ausgelöst werden kann, wenn eine Karaffe 12 auf den Standteller 13 aufgestellt ist. Wird andererseits die Karaffe während des noch laufenden Brühvorgangs von dem Standteller versehentlich entnommen, dann unterbricht der Positionsschalter 17 den Brühvorgang und das weitere Auslaufen von Kaffeebrühe. Es versteht sich, daß auch das Auslaßventil 10 als Elektromagnetventil ausgebildet ist. Zu dem einen beschriebenen Brühplatz des Standtellers 13 gehört ein Schalter 18 zum Starten eines Brühvorganges, der in dem Stromkreis des Positionsschalters 17 angeordnet ist. Der Schalter 18 kann auch an anderer Stelle als an der Vorrichtung angebracht sein, um ggfs. zusätzlich eine Fernbedienung zu ermöglichen. Der Schalter 18 kann auch mit einer Schaltuhr ausgestattet sein, um eine Zeit vorwählen zu können, nach deren Ablauf dann ein Brühvorgang ausgelöst wird. Der Standteller 13 ist als Warmhalteplatte ausgebildet. Zu ihrer Einschaltung dient ein Schalter 19. Der Positionsschalter 17 kann auch im Stromkreis dieses Schalters 19 angeordnet sein, so daß sichergestellt ist, daß die Beheizung des Standtellers 13 nur dann stattfindet, wenn auch eine Karaffe 12 auf diesen aufgestellt ist.

Wie dargestellt, sind vorzugsweise zwei Brühplätze für Kaffee vorgesehen, die gemeinsam einer einzigen Brühvorrichtung mit dem Brühraum 1 nachgeordnet sind und die insoweit identisch ausgebildet sind.

An anderer Stelle der Vorrichtung können weitere Warmhalteplatten 20 mit Schaltern 21 vorgesehen sein, um hier bereits befüllte Karaffen 12 abstellen zu können.

Die Vorrichtung weist einen Teewasserauslaufplatz 22 auf, der an sich ebenso wie die beschriebenen Auslaufplätze für die Kaffeebrühe ausgebildet ist. Nur wird verständlicherweise der Brühraum 1 umgangen, indem eine Heißwasserleitung 23 direkt an die Leitung 5 angeschlossen ist und über ein Magnetventil 24 zu dem Auslauf 11 führt. Auch hier ist die Steuereinrichtung wieder so ausgebildet und geschaltet, daß der Abzug von heißem für die Teezubereitung gewünschten Wassers nur dann stattfinden kann, wenn der Positionsschalter 17 durch das Aufstellen einer Karaffe 12 auf den Standteller 13 erfolgt ist. Durch Betätigung des Schalters 18 wird die Charge gestartet, also das Magnetventil 24 geöffnet. Ist die gesamte Charge in die Karaffe 12 ausgelaufen, dann sinkt der Standteller 13 so weit ab, daß der Schalter 16 betätigt wird, der das Ende der Charge und damit auch die Chargenmenge bestimmt.

Für Reinigungszwecke, insbes. zum Spülen des Brühraums 1 ist auch eine Kaltwasserleitung 25 vorgesehen, die zu einem Spülventil 26 führt, von dem aus eine Leitung 27 zu dem Brühraum 1 abzweigt. Der Brühraum 1 ist in bekannter Weise mit einem Spülkegel, der über ein Hubzylinderventil betätigbar ist, normalerweise verschlossen. Für das Ausspülen des ausgelaufenen Kaffeepulvers bzw. zu Reinigungs- oder Vorwärmzwecken ist an den Brühraum 1 ein Auslauf 28 gebildet.

Wie ersichtlich, ist die Vorrichtung beispielsweise mit zwei Kaffeebrühplätzen mit Warmhalteheizung und einem Teewasserauslaufplatz mit Warmhalteheizung sowie mit drei weiteren Warmhalteplätzen ausgestattet, die einzeln schaltbar sind. Das Reinigungssystem erfolgt automatisch, so daß keine Teile demontiert werden müssen. Die Vorrichtung kann beispielsweise so ausgelegt sein, daß die Karaffe 12 eine Brühcharge von 1,6 l aufnehmen kann. Es ist möglich, mit dieser aufgezeigten Vorrichtung 64 l Kaffee pro Stunde und zusätzlich etwa 32 l Heißwasser für Tee pro Stunde herzustellen. Zu der automatischen Brühvorrichtung gehört auch ein Behälter, der zur Aufnahme von etwa 2,5 kg Kaffeepulver ausgebildet ist, welches durch die Kaffeepulverzuführeinrichtung 2 automatisch dem Brühraum 1 bei jeder Brühcharge zugeleitet wird.

Die Vorrichtung kann wie folgt betrieben werden:

Um entsprechende Brühchargen vorzubereiten bzw. die Vorrichtung betriebsbereit zu machen, z.B. in einem Frühstücksraum eines Großhotels wird zunächst das Kaffeepulver aufgefüllt und der Durchlauferhitzer 4 eingeschaltet. Nach Erreichen einer Temperatur von mindestens 80°C. ist die Vorrichtung startbereit. Ggfs. erfolgt noch ein Ausspülvorgang des Brühraums 1.

Zum Füllen einer Karaffe 12 mit Heißwasser für die Teebereitung wird die Karaffe 12 auf den Teewasserauslaufplatz 22 und damit auf den dortigen Standteller 13 gestellt und durch Betätigung des Schalters 19 die Warmhalteheizung des Standtellers 13 eingeschaltet. Durch das Aufstellen der Karaffe 12 ist der Positionsschalter 17 betätigt worden, so daß durch Drücken des Schalters 18 der Beginn einer Heißwassercharge eingeleitet werden kann, indem das Magnetventil 24 geöffnet wird. Die Bedienungsperson kann sich nun anderen Aufgaben zuwenden, denn das heiße Wasser läuft in die Karaffe 12 automatisch aus. Die Charge wird durch das Gewicht der vollen Karaffe 12 in Verbindung mit dem Gewichtsschalter 16 festgelegt bzw. beendet. Dies geschieht automatisch, indem das Magnetventil 24 schließt. Die Karaffe ist damit verwendungsbereit und wird durch die weiterhin eingeschaltete Warmhalteheizung auf Temperatur gehalten. Wird die Karaffe 12 vom Teewasserauslaufplatz 22 weggenommen, bevor sie eine volle Charge aufgenommen hat, wird auch hierdurch der automatische Auslauf des Heißwassers über den Positionsschalter 17 und das Magnetventil 24 gestoppt. Die Steuervorrichtung ist so geschaltet, daß das erneute Aufsetzen einer Karaffe 12 allein einen neuen Heißwasserauslauf nicht bewirkt, sondern daß hierzu der Schalter 18 zusätzlich zu betätigen ist. Es ist somit möglich, eine z.B. noch holbvolle Karaffe 12 mit heißem Wasser vollständig zu füllen, also eine Restcharge zusätzlich aufzunehmen, deren Menge kleiner ist als die Menge einer vollen Heißwassercharge. Die Karaffe sollte möglichst während der Abgabe des heißen Wassers nicht weggenommen und auch nicht nach unten gedrückt werden, es sei denn, daß dieser Vorgang gezielt beabsichtigt ist, wenn eine Mindermenge Heißwassers gewünscht wird, die also kleiner ist als eine volle Charge.

Für das Brühen von frischem Filterkaffee stehen zwei Brühplätze zur Verfügung. Solange keiner der beiden Brühplätze mit einer Karaffe 12 besetzt ist, kann auch kein Brühvorgang gestartet werden. Durch das Aufsetzen einer (leeren) Karaffe 12 auf den Standteller 13 wird jedoch der betreffende Positonsschalter 17 betätigt, so daß durch Betätigung des Schalters 18 ein Brühzyklus, also ein Brühvorgang mit einer Brühcharge gestartet bzw. eingeleitet werden kann. Hierzu wird über die automatische Brühvorrichtung die für eine Brühcharge bestimmte Kaffeepulvermenge der Kaffeepulverzuführeinrichtung 2 in den Brühraum 1 transportiert. Nachfolgend wird automatisch das Einlaßventil 6 so gestellt, daß es die Leitung 5 mit der Leitung 7 verbindet und die Leitung 8 abschließt. Gleichzeitig wird das Auslaßventil 10 vor dem Auslauf 11 des Brühplatzes geöffnet, der mit der betreffenden Karaffe 12 besetzt ist und dessen Schalter 18 betätigt worden ist. Der Brühvorgang der Brühcharge kann unbeaufsichtigt ablaufen, d.h. die Bedienungsperson kann sich anderen Aufgaben im Frühstücksraum widmen. Es läuft der frisch gebrühte Kaffee unmittelbar aus dem Brühraum 1 über die Leitung 9, das geöffnete Auslaßventil 10 und den Auslauf 11 in die Karaffe 12 ein. dan sieht es an der Art des Ausfließens der Kaffeebrühe aus dem Auslauf 11, daß dieser Kaffee nicht aus einem im Innern der Vorrichtung verborgenen Zwischenbehälter stammt, sondern unmittelbar aus dem Brühraum kommt, weil zu Beginn eines Brühvorganges das Kaffeepulver unregelmäßig durchfeuchtet und sich auch der Auslauf der Kaffeebrühe zeitlich unterschiedlich gestaltet.

Während die erste Brühcharge läuft oder auch nur gestartet worden ist, kann eine weitere leere Karaffe 12 auf den anderen Brühplatz gestellt werden. Durch Drücken des zugehörigen Schalters 18 wird diese zweite Brühcharge vorprogrammiert, also in einen Speicher übernommen. Da nur eine Brühvorrichtung mit einem Brühraum 1 vorgesehen ist, können beide Füllvorgänge der Karaffen 12 nicht gleichzeitig sondern nur nacheinander ablaufen. Aber auch während dieses gesamten Zeitvorganges, während dem zwei Chargen gebrüht und somit zwei Karaffen gefüllt werden, ist die Bedienungsperson nicht zur Überwachung erforderlich. Die schon programmierte, aber noch nicht begonnene oder auch schon begonnene zweite Brühcharge kann durch Wegnehmen der betreffenden Karaffe 12 beendet bzw. annulliert werden. Natürlich sollte dieses Wegnehmen möglichst nicht dann erfolgen, wenn bereits die zweite Brühcharge ausläuft. Ein solches versehentliches Wegnehmen einer nicht vollgefüllten Karaffe 12 führt jedoch dazu, daß über den Positionsschalter 17 das Auslaßventil 10 geschlossen wird, so daß die restliche Kaffeebrühe einer Charge nicht auf die Vorrichtung ausläuft. Das Ende einer oder zweier Brühchargen wird jeweils durch die Gewichtsabtastung mit Hilfe des Gewichtsschalters 16 vorgenommen, so daß auch dieses Ende ohne Überwachung oder Betätigung der Vorrichtung eintritt. Eine mit einer Brühcharge befüllte Karaffe 12 kann auf die Warmhalteplatte 20 gestellt werden, wobei zweckmäßig der Schalter 21 zu betätigen ist. Anstelle des Schalters 21 könnten die Warmhalteplatten 20 auch ähnlich den Standtellern 13 ausgebildet sein und durch einen Gewichtsschalter 16 betätigt werden, der auf ein Gewicht anspricht, welches geringfügig größer ist als das Leergewicht einer Karaffe 12.

**Patentansprüche**

1. Vorrichtung zum Zubereiten vorbestimmter Mengen eines Brühgetränks, insbesondere Kaffee, mit einer Einrichtung zum Erhitzen des Brühwassers, mit einer automatischen, chargenweise arbeitenden Brühvorrichtung mit einem Einlaßventil (6) für das Brühwasser vor der Brühvorrichtung und mit mindestens zwei Auslaßventilen (10) für das Brühgetränk vor zwei Ausläufen (11), wobei unter den Ausläufen (11) je ein Standteller (13) vorgesehen ist, auf den je eine Karaffe (12) als Auffangbehälter für eine ganze Brühcharge aufstellbar und wegnehmbar vorgesehen ist, wobei das Volumen jeder Karaffe (12) an das Volumen der Brühcharge angepaßt ist und eine Steuereinrichtung zum direkten Überführen von Chargen des Brühgetränks von der Brühvorrichtung in auf den Standtellern (13) aufgestellte Karaffen (12) vorgesehen ist, die einen Speicher zum Aufnehmen und Abarbeiten eines Startimpuls für einen zweiten Brühvorgang in die andere Karaffe (12) aufweist.

2. Vorrichtung nach Anspruch 1, dadurch gekennzeichnet, daß die Steuereinrichtung einen Positionsschalter (17) zur Anzeige des mit einer Karaffe (12) besetzten Standtellers (13) aufweist.

3. Vorrichtung nach Anspruch 1, dadurch gekennzeichnet, daß die Steuereinrichtung einen Gewichtsschalter (16) aufweist, der am Standteller (13) angeordnet ist, auf das Gewicht einer mit einer ganzen Brühcharge gefüllten Karaffe (12) anspricht und dann das Auslaßventil (10, 24) schließt.

4. Vorrichtung nach Anspruch 1, dadurch gekennzeichnet, daß die Steuereinrichtung eine Einrichtung zum Abmessen einer Brühcharge Wassers, insbes. kalten Wassers, aufweist.

5. Vorrichtung nach Anspruch 1 bis 3, dadurch gekennzeichnet, daß die Vorrichtung einen Schalter (18) zum Auslösen eines eine Brühcharge umfassenden Brühvorgangs aufweist.

6. Vorrichtung nach einem der vorangehenden Ansprüche 1 bis 4, dadurch gekennzeichnet, daß der Standteller (13) als Warmhalteplatte ausgebildet ist.

7. Vorrichtung nach einem der Ansprüche 1 bis 6, dadurch gekennzeichnet, daß die Vorrichtung neben dem Standteller (13) unter dem Auslauf (11) noch einen oder mehrere als Warmhalteplatten (20) ausgebildete Standteller aufweist.

8. Vorrichtung nach einem der Ansprüche 1 bis 7, durch gekennzeichnet, daß ein Heißwasserbrühplatz (22) mit Standteller (13) und Positionssowie Gewichtsschalter (17, 16) vorgesehen ist.

## Revendications

1. Dispositif pour préparer une quantité déterminée d'infusion, en particulier de café, avec un agencement pour chauffer l'eau d'infusion, avec un dispositif d'infusion automatique, travaillant par charges successives, avec une vanne d'admission (6) pour l'eau d'infusion en amont du dispositif d'infusion et au moins deux vannes de décharge (10) pour le breuvage infusé en amont de deux orifices d'écoulement (11), dans lequel est prévu sous chacun des orifices d'écoulement (11) un plateau (13) sur lequel peut être posée, de manière amovible, une carafe (12) comme récipient de réception pour une charge complète d'infusion, le volume de chaque carafe (12) étant adapté au volume de la charge d'infusion, et un dispositif de commande étant prévu pour le transfert direct de charges d'infusion à partir du dispositif d'infusion dans les carafes (12) posées sur les plateaux (13), ce dispositif comportant une mémoire pour enregistrer et déclencher une impulsion de mise en route pour une deuxième opération d'infusion dans l'autre carafe (12).

2. Dispositif selon la revendication 1, caractérisé en ce que le dispositif de commande comporte un capteur de position (17) pour indiquer qu'un plateau (13) est occupé par une carafe (12).

3. Dispositif selon la revendication 1, caractérisé en ce que le dispositif de commande comporte un capteur de poids (16) associé au plateau (13), ce capteur répondant au poids d'une carafe (12) remplie d'une charge complète d'infusion pour fermer alors la vanne de décharge (10, 24).

4. Dispositif selon la revendication 1, caractérisé en ce que le dispositif de commande comporte un dispositif pour mesurer une charge d'eau d'infusion, en particulier une charge d'eau froide.

5. Dispositif selon les revendications 1 à 3, caractérisé en ce qu'il présente un commutateur (18) pour déclencher une opération d'infusion comportant une charge d'infusion.

6. Dispositif selon une des revendications 1 à 4 précédentes, caractérisé en ce que le plateau (13) est sous la forme d'un plateau de conservation à chaud.

7. Dispositif selon une des revendication 1 à 6, caractérisé en ce qu'il présente, en plus du plateau (13) sous l'orifice d'écoulement (11), encore un ou plusieurs plateaux (20) sous la forme de plateaux de conservation à chaud.

8. Dispositif selon une des revendications 1 à 7, caractérisé en ce qu'il est prévu un poste (22) d'eau chaude pour infusion, avec un plateau (13) et des capteurs (17, 16) de position et de poids.

## Claims

1. Device for preparing predetermined quantities of an infusion, particularly coffee, with a device for heating the brew water, with an automatic brewing device operating in measured lots, with an inlet valve (6) for the brew water in front of the brewing device and with at least two outlet valves (10) for the infusion in front of two outlets (11), underneath each of the outlets (11) a standing-plate (13) being provided, on which in each case a jug (12) is provided which can be placed thereon and removed as receptacle for a full measure of the brew, the volume of each jug (12) being adapted to the volume of the brew to be poured in, and a control device is provided — for the direct transfer of measures of the infusion from the brewing device into jugs (12) placed on the standing-plates (13) — which has a memory for receiving and processing a starting pulse for a second brewing process in the other jug (12).

2. Device according to Claim 1, characterized in that the control device has a position switch (17) to indicate that the standing-plate (13) is occupied by a jug (12).

3. Device according to Claim 1, characterized in that the control device has a weight switch (16) which is located on the standing-plate (13) which responds to the weight of a jug (12) filled with a full measure of the brew and which then closes the outlet valve, (10, 24).

4. Device according to Claim 1, characterized in that the control device has a device for measuring water, in particular cold water, for one measure of the brew.

5. Device according to Claims 1 to 3, characterized in that the device has a switch (18) for triggering a brewing process for one measure of the brew.

6. Device according to one of the preceding Claims 1 to 4, characterized in that the standing-plate (13) is designed as a hot-plate.

7. Device according to one of Claims 1 to 6, characterized in that the device has, in addition to the standing-plate (13) underneath the outlet (11), another one or more standing-plates designed as hot-plates (20).

8. Device according to one of Claims 1 to 7, characterized in that a hot water area (22) is provided with standing-plate (13) and position and weight switches (17, 16).